# EUROPÄISCHE PATENTSCHRIFT

(11) **EP 1 909 113 B1**
(45) Veröffentlichungstag und Bekanntmachung des Hinweises auf die Patenterteilung: **15.10.2008**
(21) Anmeldenummer: 07015564.3
(22) Anmeldetag: 08.08.2007
(51) Int. Cl.: G01S 7/497

(54) **Optoelektronisches Entfernungsmessgerät**
Optoelectronic distance measuring device
Appareil de mesure de distance optoélectronique

(30) Priorität: 06.10.2006 DE 102006047333
(43) Veröffentlichungstag der Anmeldung: 09.04.2008
(73) Patentinhaber: SICK AG, 79183 Waldkirch (DE)
(72) Erfinder: Torabi, Bahram, Dr., 79100 Freiburg (DE)
(74) Vertreter: Ludewigt, Christoph

(56) Entgegenhaltungen:
- DE-A1- 10 126 585
- US-A1- 2004 184 901
- US-A1- 2006 158 043

## Beschreibung

Die Erfindung betrifft ein optoelektronisches Entfernungsmessgerät nach dem Oberbegriff des Anspruchs 1 sowie ein Verfahren zur Kalibrierung eines optoelektronischen Entfernungsmessgerätes nach dem Oberbegriff des Anspruchs 7.

Aus der DE 196 43 287 A1 ist ein Verfahren und eine Vorrichtung zur Kalibrierung von Entfernungsmessgeräten bekannt. Ein Sender emittiert eine hochfrequent modulierte optische Strahlung, die von einem Messobjekt reflektiert und von einem Messempfänger mit einer Fotodiode empfangen wird. Ein Teil der Senderstrahlung wird stets als Referenzstrahlung ausgekoppelt und über einen geräteinternen Kalibrierweg auf einen Referenzempfänger geführt, dessen elektrische Signale einem geräteinternen Messempfänger zugeleitet werden. Dadurch wird eine geräteinterne optoelektronische Kalibrierung ermöglicht, die eine temperaturabhängige Phasenverschiebung der Fotodiode vollständig kompensiert. Da sich zudem auch die durch die Temperaturdriften des Senders erzeugten Phasenverschiebungen im Referenz- und Empfangssignal gegenseitig kompensieren, ergibt sich insgesamt eine erhöhte Entfernungsmessgenauigkeit, insbesondere für kurze Messzeiten und unmittelbar nach Einschalten des Geräts.

Diese Vorrichtung und das beschriebene Verfahren zur Kalibrierung von Entfernungsmessgeräten weisen jedoch wesentliche Nachteile auf. Durch die Kalibrierung werden nur geräteinterne Veränderungen kompensiert. Äußere Einflüsse können nicht kompensiert werden. Ändert sich beispielsweise eine Ausdehnung einer äußeren Kontur eines Messobjektes aufgrund einer Temperaturänderung, wird der erfasste Entfernungsweg zu dem Messobjekt verfälscht. Durch die Kalibriervorrichtung kann diese Verfälschung nicht kompensiert werden.

Weitere geräteinterne Kalibrierungen von Entfernungsmessgeräten sind aus DE 3219423 C2 und DE 29709961 U1 bekannt.

In der DE 101 26 585 A1 ist ein Positions-Referenzsystem für Aufzüge offenbart, bei dem ein Laserentfernungsmesser mit moduliertem Licht in zwei Frequenzbereichen eine Grob- und eine Feinposition ermittelt. Das Positions-Referenzsystem ist in der Lage, sich während des Betriebs selbst zu kalibrieren, wenn die Aufzugkabine stationär ist, also in der Praxis immer dann, wenn sie in einem Stockwerk anhält.

Der Erfindung liegt die Aufgabe zugrunde, eine verbesserte Anordnung mit einem optoelektronischen Entfernungsmessgerät und ein Verfahren zur Kalibrierung der Anordnung bereitzustellen.

Der auf eine Vorrichtung gerichtete Teil der Aufgabe wird erfingdungsgemäß durch die Merkmale des Anspruchs 1 gelöst.

Aufgrund der Berücksichtigung der Anfangs- und Endsignale der externen Kalibriermessstrecke, die Teil der Messstrecke ist, können Änderungen der Entfernung bzw. Länge der Messstrecke durch das optoelektronische Entfernungsmessgerät erfasst werden. Änderungen der Messstrecke aufgrund von Temperaturänderungen oder auch räumliche Verschiebungen aufgrund einer mechanischen Einwirkung können so festgestellt werden. Dadurch ist immer eine genaue Erfassung der Messstrecke möglich.

Besonders vorteilhaft ist die genannte Vorrichtung bei Regalen mit mehreren Regalfächern anzuwenden. Aufgrund der erfassten räumlichen Verschiebung des Regals wird die aktuelle Position der Regalfächer immer genau ermittelt und so wird beispielsweise ein Lade- oder Entladevorgang der Regalfächer durch ein Fahrzeug positionsgenau durchgeführt.

Vorteilhaft wird bei jedem Erreichen des Anfangs bzw. Endes der Kalibriermessstrecke das Signal an die Steuer- und Auswerteeinheit übermittelt. Da hierdurch die Kalibriermessstrecke während eines laufenden Betriebes ständig erfasst wird, kann die Auswerteeinheit eine Kalibrierung der Entfernungsmessung ständig durchführen. Das Entfernungsmessgerät stellt dann immer einen korrekten Entfernungsmesswert bereit. Veränderungen der Länge der Messstrecke werden so laufend überwacht und können dadurch sofort durch die Steuer- und Auswerteeinheit erkannt werden.

In Weiterbildung der Erfindung fällt der Anfang und das Ende der Kalibriermessstrecke mit dem Anfang und dem Ende eines Fahrwegs des Entfernungsmessgeräts zusammen. Dadurch kann die Veränderung der Kalibriermessstrecke direkt auf die Messstrecke übertragen werden. Die Veränderung der Kalibriermessstrecke braucht nicht mehr durch eine Umrechnung eines Korrekturwertes auf die Messstrecke angepasst zu werden. Dadurch kann die Steuer- und Auswerteeinheit bzw. die Kalibriereinrichtung des elektronischen Entfernungsmessgeräts sehr einfach ausgeführt sein. Auch liefert eine möglichst große Kalibriermessstrecke bestmögliche Korrekturwerte. Die Kalibriermessstrecke sollte in einem laufenden Betrieb möglichst oft komplett durchfahren werden, um Änderungen der Messstrecke möglichst frühzeitig erkennen zu können. Insofern sollte die Kalibriermessstrecke in einem Bereich angeordnet werden, der innerhalb der Messstrecke häufig durchfahren wird.

Um das optoelektronische Entfernungsmessgerät weiter zu verbessern, wird nach jeder Übermittlung des Signals ein Korrekturwert durch die Kalibriereinrichtung ermittelt. Dadurch kann eine Abweichung ständig erkannt und sofort korrigiert werden. Auf Abweichungen in den Abmessungen der Kalibriermessstrecke kann somit sofort reagiert werden.

In einer Ausführung der Erfindung ist der Lichtsender zur Aussendung von Lichtimpulsen ausgelegt, aus deren Laufzeit entlang der Messstrecke die Steuer- und Auswerteeinheit eine Entfernung ermittelt. Durch die Ermittlung der Entfernung über eine Laufzeit des Lichtes können optische Komponenten des Entfernungsmessgeräts sehr einfach ausgeführt werden, es ist nur eine einzige Empfangsoptik notwendig. Durch eine Auswertung der Lichtimpulse entsprechend der Laufzeit in der Auswerte- und Steuereinheit kann die Entfernung sehr genau ermittelt werden.

In einer alternativen Weiterbildung der Erfindung ist der Lichtsender zur Aussendung von moduliertem Licht ausgebildet, so dass die Steuer- und Auswerteeinheit die Entfernung aus einer Phasendifferenz zwischen ausgesandtem und empfangenem Licht ermittelt. Auch hier braucht nur eine einzige Empfangsoptik vorgesehen zu werden. Eine Auswertung der Phasendifferenz von moduliertem Licht führt zu einer erhöhten Unempfindlichkeit bei Fremdlichteinflüssen. So kann die Entfernungsmessung auch unter störenden Umgebungslichteinflüssen stabil durchgeführt werden.

Der auf ein Verfahren gerichtete Teil der Aufgabe wird erfindungsgemäß durch die Merkmale des Anspruchs 6 gelöst.

Aufgrund der ermittelten Korrekturwerte kann bei dem erfindungsgemäßen Verfahren die zu überwachende Messstrecke aufgrund von Änderungen zum Beispiel durch Temperatureinflüsse oder mechanische Verschiebungen korrigiert werden.

Im Folgenden wird die Erfindung an Hand von Ausführungsbeispielen unter Bezugnahme auf die Zeichnung im Einzelnen erläutert.

In der Zeichnung zeigen:
Figur 1 und 2
   eine schematische Darstellung eines erfindungsgemäßen optoelektronischen Entfernungsmessgerätes zur Messung einer Entfernung;
Figur 3
   ein Diagramm zur Darstellung der Abhängigkeit von einem Ausgabewert und einem ermittelten Abstand;
Figur 4
   ein Diagramm zur Darstellung des Korrekturwertes.

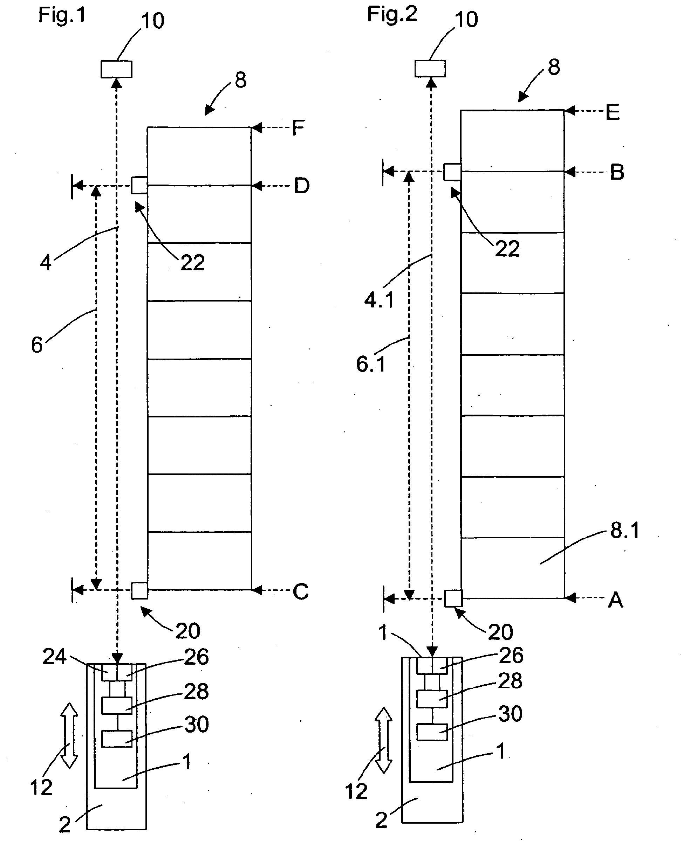

Figur 1 zeigt eine erfindungsgemäße Anordnung mit einem optoelektronischen Entfernungsmessgerät 1 zur Messung einer Entfernung über eine Messstrecke 4. Das optoelektronische Entfernungsmessgerät 1 ist dabei an einem Wagen 2, beispielsweise an einem Regalfahrzeug, befestigt. Der Wagen 2 wird in Bewegungsrichtung 12 entlang der Messstrecke 4 bewegt.

Der Wagen 2 hat in diesem Ausführungsbeispiel die Aufgabe, ein Regal 8 mit verschiedenen Regalabschnitten zu beladen oder Material aus dem Regal 8 aufzunehmen. Um das Regal 8 entladen zu können, werden die einzelnen Regalabschnitte des Regals 8 direkt von dem Wagen 2 angefahren. Der Wagen 2 wird dazu vor einem gewünschten Regalabschnitt genau positioniert über eine Erfassung der Entfernung zu einem ortsfesten Zielreflektor 10.

Die Erfindung kann neben der gezeigten Anwendung entlang eines Regals 8 auch beispielsweise für Regale 8 oder andere Anwendungen eingesetzt werden, bei denen Positionieraufgaben nicht nur entlang einer Strecke, sondern auch entlang mehrerer Achsen durchgeführt werden sollen. So kann bei einer Anwendung in der Lagertechnik neben der Länge der Regale 8 bzw. Regalfächer auch die Höhe des Regals 8 mit übereinander angeordneten Regalfächern oder auch zusätzlich noch eine Breite des Regals 8 mit angeordneten Regalfächern positionsgenau angefahren werden.

Zur Messung der Entfernung werden Lichtimpulse von einem Lichtsender 24 auf den Zielreflektor 10 ausgesendet. Reflektierte Lichtimpulse werden von einem Lichtempfänger 26 empfangen. Der Lichtsender 24 und der Lichtempfänger 26 werden von einer Steuer- und Auswerteeinheit 28 angesteuert bzw. ausgewertet. Von der Steuer- und Auswerteeinheit 28 wird eine Lichtlaufzeit der reflektierenden empfangenen Lichtimpulse ausgewertet und die Entfernung und damit die Position des Wagens zu dem Zielreflektor 10 ermittelt. Die Entfernung von dem Entfernungsmessgerät 1 zu dem Zielreflektor 10 entspricht der Länge der Messstrecke 4. Einzelne beispielhafte Positionen des Wagens 2 sind mit den Buchstaben C, D und F bezeichnet. Gleiche Teile werden in den Figuren mit gleichen Bezugszeichen bezeichnet.

Der Wagen 2 wird dabei über einen Ausgabewert der Steuer- und Auswerteeinheit 28 des optischen Entfernungsmessgerätes 1 angesteuert. Der Ausgabewert ist dabei proportional zu der Entfernung zu dem Zielreflektor 10 und in der Steuer- und Auswerteeinheit 28 hinterlegt.

Entlang der Messstrecke 4 ist eine Kalibriermessstrecke 6 vorhanden, die durch zwei Lichtschranken 20 und 22 an Positionen C und D begrenzt ist. Diese Kalibriermessstrecke 6 entspricht in diesem Ausführungsbeispiel einem Teil der Messstrecke 4. Beim Durchfahren der Messstrecke 4 durch den Wagen 2 wird zunächst die Lichtschranke 20 aktiviert. Bei Aktivierung der Lichtschranke 20 wird ein Signal an eine Kalibriereinrichtung 30 des optoelektronischen Entfernungsmessgerätes 1 übertragen. Diese Übertragung kann beispielsweise über Funk, optisch oder eine andere Übertragungsart erfolgen.

Die Kalibriereinrichtung 30 ist wiederum mit der Steuer- und Auswerteeinheit 28 verbunden. Durch das Signal der Lichtschranke 20 erhält die Steuer- und Auswerteeinheit 28 somit ein Kalibrierungssignal, um die gemessene Entfernung aufgrund der Laufzeit zu dem Zielreflektor 10 mit dem Signal der Lichtschranke 20 zu vergleichen und zu überprüfen.

An einer zweiten Position D der Messstrecke 4 ist die zweite Lichtschranke 22 angeordnet zur Abgabe eines zweiten Signals an die Kalibriereinrichtung 30 zur Überprüfung einer zweiten Position D des Wagens 2 innerhalb der Messstrecke 4. Die Positionen der beiden Lichtschranken 20 und 22 als Anfang und Ende der Kalibriermessstrecke 6 können beispielsweise bei einer Inbetriebnahme eingelernt werden. Ein solcher Einlernvorgang kann beispielsweise durch Betätigen einer Taste am Entfernungsmessgerät 1 durchgeführt werden. Dabei wird ein Bezug zwischen der Position C und D des Anfangs und Endes der Kalibrierstrecke 6 und deren Ausdehnung in Bezug auf die Messstrecke 4 festgelegt.

In Figur 2 ist die gleiche Vorrichtung wie in Figur 1 gezeigt dargestellt. Lediglich die Länge der Kalibriermessstrecke 6.1 sowie die Länge der Messstrecke 4.1 sind größer, zum Beispiel aufgrund einer Temperaturerhöhung oder einer mechanischen Einwirkung und der damit verbundenen Längenausdehnung oder Verschiebung des Regals 8 im Gegensatz zu der Länge der Kalibriermessstrecke 6 und der Messstrecke 4 aus Figur 1. Die korrespondierenden möglichen Positionen des Wagens 2 sind mit den Buchstaben A, B und E bezeichnet. Dabei entspricht Position A der vorhergehenden Position C in Bezug auf das Regal 8, Position B der Position C und Position E der vorhergehenden Position F aus Figur 1 jeweils in Bezug auf das Regal 8. Eine exakte Positionierung des Wagens 2 zu den einzelnen Regalabschnitten wäre allein aufgrund der Entfernungsmessung zu dem Zielreflektor 10 nicht mehr möglich, da sich beispielsweise Regalabschnitt 8.1 in einer anderen Entfernung bezüglich des Zielreflektors 10 befindet.

Mit Hilfe der zwei Signale der ersten und zweiten Lichtschranke 20 und 22 lässt sich nun der momentan veränderte Abstand der Kalibriermessstrecke 6.1 ermitteln und daraufhin die Länge der Messstrecke 4.1 und eine Verschiebung zur Kalibriermessstrecke 6.1 neu bestimmen.

Hierzu ist die Länge der bisherigen Kalibriermessstrecke 6 in der Steuer- und Auswerteeinheit 28 gespeichert oder eingelernt. Das optoelektronische Entfernungsmessgerät 1 misst laufend die Entfernung zu dem Zielreflektor 10, um seine momentane Position zu bestimmen. Bei einer Fahrt auf den Zielreflektor 10 wird nun nacheinander erst die erste Lichtschranke 20 an Position A und dann die zweite Lichtschranke 22 an Position B unterbrochen. Bei dem Durchfahren der Lichtschranken 20 und 22 wird jeweils die aktuell festgestellte Position des optoelektronischen Entfernungsmessgeräts 1 abgespeichert. Nach dem Durchfahren der zweiten Lichtschranke 22 wird von der Steuer- und Auswerteeinheit 28 festgestellt, dass der ursprüngliche Abstand zwischen der Position C und der Position D der Kalibrierungsstrecke 6 aus Figur 1 nicht mehr mit dem aktuellen Abstand zwischen Position A und Position B der Kalibrierungsstrecke 6.1 übereinstimmt und größer ist als der ursprüngliche Abstand zwischen Position C und Position D. Zusätzlich kann festgestellt werden, dass der Abstand von Position E der Kalibrierungsstrecke 6.1 zu dem Zielreflektor 10 kleiner ist als der bisherige Abstand von Position F zu dem Zielreflektor 10. Aufgrund dieser Informationen, welche der Kalibriereinrichtung 30 über die Steuer- und Auswerteeinheit 28 übermittelt werden, kann die Kalibriereinrichtung 30 einen Korrekturwert bestimmen, um den Wagen 2 an die neuen Abstände angepasst ansteuern zu können. Der zur Ansteuerung des Wagens 2 verwendete Ausgabewert wird durch den Korrekturwert korrigiert.

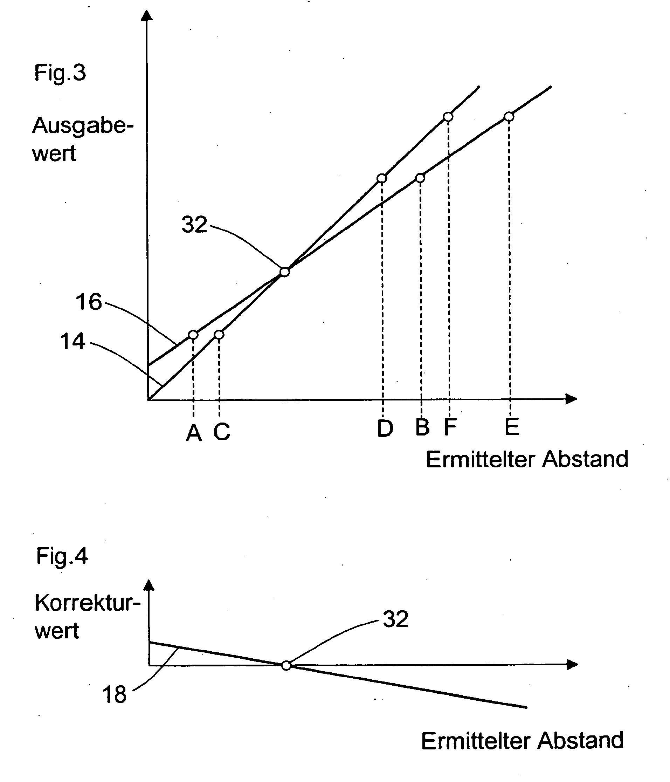

Die Berechnung des Korrekturwertes geht aus den Diagrammen in Figur 3 und 4 hervor. In Figur 3 ist der ermittelte Abstand des optoelektronischen Entfernungsmessgerätes 1 zu dem Zielreflektor 10 auf der Abszisse aufgetragen. Auf der Ordinate ist der Ausgabewert des optoelektronischen Entfernungsmessgerätes 1 aufgetragen, der proportional zu dem ermittelten Abstand ist. In diesem Ausführungsbeispiel handelt es sich um eine lineare Funktion des Ausgabewertes zu dem ermittelten Abstand. Es kann sich hierbei aber auch um eine andere mathematische Funktion handeln. Bei einer ersten Funktion 14 handelt es sich um eine erste ermittelte Abstandsfunktion mit den Abstandswerten C, D und F aus Figur 1. Bei der zweiten Funktion 16 handelt es sich um eine zweite ermittelte Abstandsfunktion mit den Abstandswerten A, B und E aus Figur 2. Bei der Funktion 14 sind die Abstände zwischen den Positionen C und D der Kalibriermessstrecke 6 kürzer als in Funktion 16 mit den Abständen zwischen den Positionen A und B der Kalibriermessstrecke 6.1. Auch die Teilabstände der Messstrecke zwischen den Positionen D und F sind kürzer als die Teilabstände zwischen den Positionen B und E der Messstrecke aus Figur 2. Die beiden Funktionen schneiden sich in einem Schnittpunkt 32. Dieser Schnittpunkt 32 entspricht einem Punkt des Regals 8, welcher keine Verschiebung zu der Messstrecke 4.1 aufgrund einer Temperaturänderung erfahren hat. Dies kann z. B. an einer Stelle des Regals 8 sein, wo dieses mit einem Untergrund befestigt ist. Ohne eine Befestigung kann sich der Schnittpunkt 32 auch abhängig von der Verschiebung verändern, so kann der Schnittpunkt 32 auch beispielsweise im Ursprung des Diagramms liegen.

Aufgrund der unterschiedlichen Ausgabewerte der unterschiedlichen Funktionen 14 und 16 bei einem gleichen ermittelten Abstand des optoelektronischen Entfernungsmessgerätes 1 kann eine Korrekturwertfunktion 18 ermittelt werden, welche der Subtraktion von Funktion 16 mit Funktion 14 entspricht. Um einen gleichen Ausgabewert entsprechend einer gewünschten Position A, B und E aus Figur 2 im Vergleich zu den Positionen C, D und E aus Figur 1 zu erhalten, braucht lediglich der errechnete Korrekturwert zu der Funktion 14 hinzuaddiert werden, um zu den Ausgabewerten aus Figur 1 zu gelangen. Dadurch liefert das optoelektronische Entfernungsmessgerät konstante Ausgabewerte bezüglich einer Position innerhalb der Messstrecke 4 und 4.1, unabhängig von Längenänderungen der Messstrecke 4 und 4.1 aufgrund von Temperaturänderungen oder anderen äußeren Einflüssen.

## Patentansprüche

1. Anordnung, umfassend ein optoelektronisches Entfernungsmessgerät (1) zur Messung einer Entfernung des entlang einer Messstrecke (4, 4.1) verfahrbaren Entfernungsmessgeräts (1) zu einem ortsfesten Ziel (10) und damit Bestimmung einer Position entlang der Messstrecke, wobei das Entfernungsmessgerät einen Lichtsender (24), einen Lichtempfänger (26), eine Steuer- und Auswerteeinheit (28) sowie eine Kalibriereinrichtung (30) aufweist und die Anordnung eine Kalibriermessstrecke (6, 6.1) umfasst, die wenigstens einem Teil der Messstrecke (4, 4.1) entspricht, wobei ein den Anfang bzw. das Ende der Kalibriermessstrecke (6, 6.1) repräsentierendes Signal an die Kalibriereinrichtung (30) übermittelbar ist, wenn das Entfernungsmessgerät (1) den Anfang bzw. das Ende der Kalibriermessstrecke (6, 6.1) erreicht, **dadurch gekennzeichnet, dass** nach jeder Übermittlung eines Signals ein Korrekturwert durch die Kalibriereinrichtung (30) ermittelbar ist, mit dem Ausgabewerte des Entfernungsmessgeräts (1) korrigiert werden, um die Ausgabewerte unabhängig von Längenänderungen der Messstrecke (4, 4.1) zu machen.

2. Anordnung nach Anspruch 1, **dadurch gekennzeichnet, dass** bei jedem Erreichen des Anfangs bzw. Endes der Kalibriermessstrecke (6, 6.1) ein Signal an die Steuer- und Auswerteeinheit (28) übermittelbar ist.

3. Anordnung nach einem der vorhergehenden Ansprüche, **dadurch gekennzeichnet, dass** der Anfang und das Ende der Kalibriermessstrecke (6, 6.1) mit dem Anfang und Ende des Fahrwegs des Entfernungsmessgeräts zusammenfallen.

4. Anordnung nach einem der vorhergehenden Ansprüche, **dadurch gekennzeichnet, dass** der Lichtsender (24) zur Aussendung von Lichtimpulsen ausgelegt ist, aus deren Laufzeit entlang der Messstrecke (4, 4.1) die Steuer- und Auswerteeinheit (28) eine Entfernung ermittelt.

5. Anordnung nach einem der vorhergehenden Ansprüche, **dadurch gekennzeichnet, dass** der Lichtsender (24) zur Aussendung von moduliertem Licht ausgebildet ist, so dass die Steuer- und Auswerteeinheit (28) die Entfernung aus einer Phasendifferenz von ausgesandtem und empfangenem Licht entlang der Messstrecke (4, 4.1) ermittelt.

6. Verfahren zur Kalibrierung einer Anordnung, umfassend ein optoelektronisches Entfernungsmessgerät (1) zur Messung einer Entfernung und damit Bestimmung einer Position entlang einer Messstrecke (4, 4.1), mit folgenden Schritten:
- Verfahren des Entfernungsmessgeräts (1) entlang einer Kalibriermessstrecke (6, 6.1), die wenigstens einem Teil der Messstrecke (4, 4.1) entspricht,
- Bereitstellen eines Anfangs- und eines Endsignals am Anfang bzw. Ende der Kalibriermessstrecke (6, 6.1),
- Übermitteln des jeweiligen Signals, bei Erreichen des Anfangs bzw. Endes der Kalibriermessstrecke (6, 6.1), an eine Kalibriereinrichtung (30) des Entfernungsmessgeräts (1),
**gekennzeichnet durch**
- Ermitteln von Korrekturwerten aus den Signalen nach jeder Übermittlung eines Signals, mit denen Ausgabewerte des Entfernungsmessgeräts (1) korrigiert werden, um die Ausgabewerte unabhängig von Längenänderungen der Messstrecke (4, 4.1) zu machen.

## Claims

1. An arrangement comprising an optoelectronic distance measurement device (1) for the measurement of a distance of the distance measurement device (1) movable along a measurement path (4, 4.1) toward a stationary target (10) and thus determination of a position along the measurement path, wherein the distance measurement device has a light transmitter (24), a light receiver (26), a control and evaluation unit (28) as well as a calibration device (30) and the arrangement comprises a calibration measurement path (6, 6.1) which corresponds to at least one part of the measurement path (4, 4.1), wherein a signal representing the start or the end of the calibration measurement path (6, 6.1) can be transmitted to the calibration device (30) when the distance measurement device (1) reaches the start or the end of the calibration path (6, 6.1), **characterized in that** a correction value can be determined by the calibration device (30) after each transmission of a signal and output values of the distance measurement device (1) are corrected by it to make the output values independent of length changes of the measurement path (4, 4.1).

2. An arrangement in accordance with claim 1, **characterized in that** a signal can be transmitted to the control and evaluation unit (28) each time the start or end of the calibration measuring path (6, 6.1) is reached.

3. An arrangement in accordance with any one of the preceding claims, **characterized in that** the start and the end of the calibration measurement path (6, 6.1) coincide with the start and end of the travel path of the distance measurement device.

4. An arrangement in accordance with any one of the preceding claims, **characterized in that** the light transmitter (24) is designed for the transmission of light pulses from whose time of flight along the measurement path (4, 4.1) the control and evaluation unit (28) determines a distance.

5. An arrangement in accordance with any one of the preceding claims, **characterized in that** the light transmitter (24) is adapted for the transmission of modulated light such that the control and evaluation unit (28) determines the distance from a phase difference of transmitted and received light along the measurement path (4, 4.1).

6. A method for the calibration of an arrangement comprising an optoelectronic distance measurement device (1) for the measurement of a distance and thus determination of a position along a measurement path (4, 4.1), having the following steps:
- traveling the distance measurement device (1) along a calibration measurement path (6, 6.1) which corresponds to at least a part of the measurement path (4, 4.1);
- providing a start signal and an end signal at the start or end respectively of the calibration measurement path (6, 6.1);
- transmitting the respective signal when the start or end of the calibration measurement path (6, 6.1) is reached to a calibration device (30) of the distance measurement device (1),
**characterized by**
- determining correction values from the signals after each transmission of a signal with which output values of the distance measurement device (1) are corrected to make the output values independent of the measurement path (4, 4.1).

## Revendications

1. Agencement comprenant un appareil de mesure de distance (1) optoélectronique pour la mesure d'une distance de l'appareil de mesure de distance (1) déplaçable le long d'un tronçon de mesure (4, 4.1) à un objectif (10) fixe et pour la détermination d'une position le long du tronçon de mesure, l'appareil de mesure de distance présentant un émetteur de lumière (24), un récepteur de lumière (26), une unité de commande et d'analyse (28) et un dispositif d'étalonnage (30) et l'agencement comportant un tronçon de mesure d'étalonnage (6, 6.1), qui correspond à au moins une partie du tronçon de mesure (4, 4.1), un signal représentant respectivement le début et la fin du tronçon de mesure d'étalonnage (6, 6.1) pouvant être transmis au dispositif d'étalonnage (30), lorsque l'appareil de mesure de distance (1) atteint le début ou la fin du tronçon de mesure d'étalonnage (6, 6.1), **caractérisé en ce que**, après chaque transmission d'un signal, une valeur de correction peut être déterminée par le dispositif d'étalonnage (30), avec laquelle des valeurs de sortie de l'appareil de mesure de distance (1) sont corrigées, afin de rendre les valeurs de sortie indépendantes des variations de longueur du tronçon de mesure (4, 4.1).

2. Agencement selon la revendication 1, **caractérisé en ce qu'**un signal peut être transmis à l'unité de commande et d'analyse (28) chaque fois que le début ou la fin du tronçon de mesure d'étalonnage (6, 6.1) est atteint.

3. Agencement selon l'une quelconque des revendications précédentes, **caractérisé en ce que** le début et la fin du tronçon de mesure d'étalonnage (6, 6.1) coïncident avec le début et la fin du chemin de déplacement de l'appareil de mesure de distance.

4. Agencement selon l'une quelconque des revendications précédentes, **caractérisé en ce que** l'émetteur de lumière (24) est conçu pour l'envoi d'impulsions lumineuses, à partir du temps de parcours desquelles l'unité de commande et d'analyse (28) détermine une distance le long du tronçon de mesure (4, 4.1).

5. Agencement selon l'une quelconque des revendications précédentes, **caractérisé en ce que** l'émetteur de lumière (24) est conçu pour l'envoi de lumière modulée, de sorte que l'unité de commande et d'analyse (28) détermine la distance à partir d'une différence de phase entre la lumière émise et la lumière reçue le long du tronçon de mesure (4, 4.1).

6. Procédé pour l'étalonnage d'un agencement, comprenant un appareil de mesure de distance (1) optoélectronique, pour la mesure d'une distance et pour la détermination d'une position le long d'un tronçon de mesure (4, 4.1), présentant les étapes suivantes :
- déplacement de l'appareil de mesure de distance (1) le long d'un tronçon de mesure et d'étalonnage (6, 6.1) qui correspond au moins à une partie du tronçon de mesure (4, 4.1),
- mise à disposition d'un signal de début et d'un signal de fin respectivement au début et à la fin du tronçon de mesure d'étalonnage (6, 6.1),
- transmission du signal concerné, lorsqu'on atteint le début ou la fin du tronçon de mesure d'étalonnage (6, 6.1), à un dispositif d'étalonnage (30) de l'appareil de mesure de distance (1),
**caractérisé par**
- la détermination de valeurs de correction à partir des signaux après chaque transmission d'un signal, avec lesquelles des valeurs de sortie de l'appareil de mesure de distance (1) sont corrigées, afin de rendre les valeurs de sortie indépendantes des variations de longueur du tronçon de mesure (4, 4.1).
